(19) Europäisches Patentamt
European Patent Office
Office européen des brevets

(11) **EP 3 276 389 A1**

(12) **EUROPEAN PATENT APPLICATION**

(43) Date of publication:
**31.01.2018 Bulletin 2018/05**

(21) Application number: **16181396.9**

(22) Date of filing: **27.07.2016**

(51) Int Cl.:
*G02B 21/14* (2006.01)        *G01N 21/45* (2006.01)
*G01N 15/02* (2006.01)        *B82Y 35/00* (2011.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicants:
• **Fundació Institut de Ciències Fotòniques
08860 Castelldefels (Barcelona) (ES)**
• **Institució Catalana De Recerca I
Estudis Avançats (ICREA)
08010 Barcelona (ES)**

(72) Inventors:
• **LIEBEL, Matz
08860 CASTELLDEFELS (ES)**
• **HUGALL, James Tom
08860 CASTELLDEFELS (ES)**
• **VAN HULST, Niek F.
08860 CASTELLDEFELS (ES)**

(74) Representative: **Oficina Ponti, SLP
C. de Consell de Cent 322
08007 Barcelona (ES)**

(54) **A COMMON-PATH INTERFEROMETRIC SCATTERING IMAGING SYSTEM AND A METHOD OF USING COMMON-PATH INTERFEROMETRIC SCATTERING IMAGING TO DETECT AN OBJECT**

(57)    The present invention relates to a common-path interferometric scattering imaging system and a method of using such a system, where the system comprises:
- illuminating means for emitting an illumination beam ($L_0$);
- light collecting means for collecting through a common collection optical path:
- a scattered beam ($L_s$) provided by the light scattering on an object (T) of the illumination beam ($L_0$); and
- a reference beam ($L_r$) provided by the reflection on or transmission through an interface (I) of the illumination beam ($L_0$);

- image sensing means (D) for receiving and sensing the collected scattered ($L_s$) and reference ($L_r$) beams interfering thereon as an interferometric light signal;
- attenuation means arranged in the common collection optical path for attenuating the reference beam ($L_r$) before it arrives at the image sensing means (D); and
- processing means (P) to process data corresponding to the interferometric light signal.

Fig. 3

**Description**

FIELD OF THE INVENTION

The present invention relates to a common-path interferometric scattering imaging system and to a method of using common-path interferometric scattering imaging to detect an object, providing an enhanced detection sensitivity.

BACKGROUND OF THE INVENTION

There are many different standard scattering imaging systems which use techniques known in the art which constitute only technological background to the present invention, some of which will be briefly described below.

Phase contrast microscopy (PCM) was introduced from the 1950s, and is a technique which uses phase masks for shifting the phase of scattered light relative to transmitted light to enhance contrast in biological samples due to the large phase shifts introduced by the biological material, such as cells, being studied. As the object of interest shrinks in-size, this technique quickly becomes irrelevant as the phase shift introduced by the biological material becomes small and the scattering signal (which scales as $D^6$, where D is the dimension of interest) is rapidly dwarfed by the background light. For modern studies this has meant that PCM is an abandoned technique when trying to look at sub-cellular elements such as individual proteins, where currently fluorescence microscopy is the standard technique.

Dark-field microscopy is another well-established and documented microscopy technique with literature and patents dating from the early 20th century. Like PCM it relies on detecting the scattering signal from a sample. It uses a dark-field mask which completely blocks any background light, allowing only the scattered light to be detected. Again this means that for small particles, due to the unfavourable scaling of scattering signal, the technique becomes very hard to implement due to the low number of photon counts to background noise and thus is not used.

Common-path interferometric scattering imaging systems comprising the features included in the preamble clause of claim 1 of the present invention are known in the art. These systems are usually called iSCAT, and constitute a modern take on phase contrast microscopy (see Lindfors et al. PRL, 93, 3 (2004) - Modern method describing reflection based iSCAT technique, and Piliarik et al. Nature Communications, 5,4495 (2014). These systems generally use a coherent light source (or at least a light source emitting extremely short coherence length light) to generate a reference beam from reflection of the glass/water interface of the coverslip within the focal volume of a microscope objective. The light also generates scattering from particles in the sample. Both the scattered and reference beam are then collected by the objective and imaged onto a camera where they interfere. The common-path nature of this interferometric setup, with reference and scattered beams generated at practically the same position ensures a phase-locked relationship between the two and great stability.

Common-path interferometric microscopic techniques rely on enhancing small signals using a reference beam to boost a small signal term by interfering the two beams. This provides so-called noiseless gain. The reference and the signal or scattering beam originate from the same light source as coherence between the two signals is essential. In general the intensity on a detector caused by two interfering beams can be described as:

$$I_{total} = I_0\{r^2 + s^2 + 2rs\cos\theta\}$$

Where r is the relative reference beam amplitude, s is the relative signal beam amplitude and $\theta$ the phase difference between the reference beam and signal or scattering beam.

As the signal of interest is small (i.e. when the scattering beam is weak, generally due to the object being small), the second term ($s^2$) vanishes compared to the other two terms. The key term of interest is the interference term ($2rs\cos\theta$) which includes the signal of interest. All existing interferometric microscopy techniques solely try to maximise this interference term.

Indeed, existing techniques usually optimise the phase difference $\theta$ between the beams to maximise the interference term and, by increasing the power of the illumination light beam, increase the power of the reference beam [essentially the system gain] to increase the signal, up to the saturation point of their detectors.

By comparing successive images with and without the object of interest, the background reference beam term ($r^2$), which in a good system remains constant, can be removed leaving only the interference term. In the perfect system, this means that the only source of noise will come from the photon or shot noise caused by the total light falling on the detector. Since this noise scales with $\sqrt{n}$, where n is the number of photons on the detector, the more photons the camera can record the better the signal-to-noise.

The fact that the reference beam is proportional to the gain of the system and that the more photons collected the better the signal-to-noise, has led to a focus on finding detectors with large photon [electron full well] capacity to maximise the signal.

Therefore, existing iSCAT systems, i.e. common-path interferometric scattering imaging systems, teach away from carrying out a variation in the power of the reference beam other than an increasing thereof, in order to maximize the interference term ($2rs\cos\theta$) and thus enhance the signal-to-noise ratio. This reference beam power increase approach has, among others, the drawback associated to the need of using expensive detectors (with large photon capacity).

Hence, it can be stated that iSCAT combined with a well-stabilized laser light source and expensive cameras with large full well capacity and low noise, has allowed the detection and tracking of small particles, despite the small scattering signal on top of a large background, but that the cost to implement this technique as well as the skill required, however, has become prohibitively expensive and prevents its use on a large scale.

It is, therefore, necessary to provide an alternative to the state of the art which covers the gaps found therein, by providing a common-path interferometric scattering imaging system including an alternative mechanism to enhance detection sensitivity which does not possess the above mentioned drawbacks of the existing iSCAT systems.

SUMMARY OF THE INVENTION

To that end, the present invention relates, in a first aspect, to a common-path interferometric scattering imaging system comprising, in a known manner:

- illuminating means comprising a light source configured and arranged for emitting an illumination beam along an illumination optical path including at least two different phases of matter;
- light collecting means configured and arranged for simultaneously at least partially collecting through a common collection optical path:

  - a scattered beam provided by the light scattering by an object of a portion of said illumination beam, wherein said object is placed in at least one of said two different phases of matter; and
  - a reference beam provided by the reflection on or transmission through an interface of another portion of said illumination beam, wherein said interface is a surface forming a common boundary among said two different phases of matter;

- image sensing means configured and arranged for receiving and sensing the collected scattered and reference beams interfering thereon as an interferometric light signal; and
- processing means connected to said image sensing means to receive data corresponding to said interferometric light signal, and configured to process said received data to at least detect said object, and, optionally, also to track the object.

In contrast to the known common-path interferometric scattering imaging systems, the one of the first aspect of the present invention comprises, in a characterizing manner, attenuation means arranged in the above mentioned common collection optical path for attenuating said reference beam before it arrives at the image sensing means.

The processing means implements an algorithm to process the received data according to the following equation:

$$I_{total} = I_0 \left\{ \frac{r^2}{\alpha^2} + s^2 + \frac{2rs}{\alpha} \cos\theta \right\}$$

where r is the normalised reference beam amplitude, *s* is the normalised scattering beam amplitude, $\theta$ is the phase difference between the reference and scattering beams, $\alpha$ is the attenuation amplitude defined as the reciprocal transmission amplitude, $I_{total}$ is the total intensity of the light on the image sensing means caused by the two interfering reference and scattering beams, and $I_0$ is an initial light intensity on the image sensing means, wherein said attenuation means have a degree of attenuation for said reference beam calculated with the purpose of maximizing the term $\frac{2rs}{\alpha} \cos\theta$ with respect to the term $\frac{r^2}{\alpha^2}$ of the above equation to enhance detection sensitivity.

In other words, the system of the present invention do the exact opposite of what existing iSCAT systems have logically been aiming for: to attenuate the reference beam.

This is so because, in contrast to the prior art iSCAT systems, instead of focusing purely on signal-to-noise, the system of the first aspect of the present invention highlights an alternative mechanism to enhance detection sensitivity by enhancing the signal-to-background, i.e. $\frac{2rs}{\alpha} \cos\theta$ relative to $\frac{r^2}{\alpha^2}$. By attenuating the reference beam after it the signal beam, i.e. the scattering beam, has been created (i.e. after the scattering event and in collection), the interference term is maximised, as the interference term scales linearly with reference beam amplitude relative to the rapidly decreasing reference beam background which scales quadratically. This increases the signal-to-background and compensates exactly for the loss in signal-to-noise due to increase in shot noise due to lower number of photons collected. Not only does this allow (far more economical) detectors with smaller electron full well capacities, but for larger full-well-capacity cameras, the initial light (i.e., illumination beam) incident on the object can be further increased to increase scattering intensity and increase detection sensitivity, i.e. maximising both signal-to-noise and signal-to-background.

The attenuation means of the system of the present invention does not fully attenuate the reference beam (as in DFM), and unlike in PCM it does not introduce any significant phase delay between the signals. In fact it works to attenuate the reference beam in amplitude relative to the scattering beam to maximise contrast in an interference setup. Therefore it is conceptually very different from both of the above techniques, neither is it a combination of the above two techniques, but a new form of interference scattering microscopy suitable for detecting small particles of increasing importance in biological sciences as well as many other industrial processes such as nanotechnology.

For an embodiment, the attenuation means comprises a partially transmissive mask having a semi-transmissive region arranged in a corresponding region of the common collection path through which the reference beam travels, such that the reference beam is attenuated on transmission before reaching the image sensing means.

For an alternative embodiment, the attenuation means comprises a partially reflective mask having a semi-reflective region arranged in a corresponding region of the common collection path through which the reference beam travels, such that the reference beam is attenuated on reflection before reaching the image sensing means.

According to specific implementations of any of the above two embodiments, the semi-transmissive or semi-reflective region of the mask is a first region of said partially transmissive or partially reflective mask, the mask comprising a second region arranged in a corresponding region of the common collection path through which part of the scattering beam travels, such that said part of the scattering beam traverses said second region or is reflected thereon thereby before reaching the image sensing means, by transmission or by reflection, wherein said first and said second regions have different transmissive or reflective properties and said partially transmissive or partially reflective mask maintains the coherence relationship between the reference and scattered beams.

Preferably, said second region is a fully or substantially fully transmissive or reflective region, although for less preferred embodiments the second region can also have some degree of light attenuation.

According to a preferred embodiment, the first region of the partially transmissive mask has a circular or cylindrical shape and said second region has an annular or tubular shape with an inner diameter larger than the diameter of said first region and being arranged concentrically with respect thereto.

Other types of optical attenuators, which are not constituted by a mask, are also encompassed for other less preferred embodiments of the system of the first aspect of the present invention.

The illumination optical path and the common collection path are configured and arranged such that the reference and scattered beams are generated at such closer positions that ensure a phase-locked relationship between the reference and scattered beams, so that there is no need for varying or adjusting the phase of any of said beams. Hence, the system is absent of any phase varying mechanism for said reference and scattered beams as there is no need for phase adjusting.

According to an embodiment, the system of the first aspect of the invention comprises a coverslip for the object, wherein the above mentioned interface is the common boundary surface among said coverslip and a medium into which said object is placed, the material of which said coverslip is made being non-index matched with said medium.

According to a first implementation of the system of the first aspect of the invention, called herein as reflective mode, the light collecting means are configured and arranged for collecting said reference beam provided by the reflection on said interface of said another portion of the illumination beam, wherein the system comprises an objective lens which forms part of both the illuminating means and the light collecting means and which is configured and arranged in both the illumination and the collection optical paths to, respectively:

- focus the illumination beam into the back-focal plane of said objective lens to produce illumination out of the front aperture of the objective lens, such that a portion thereof will be reflected by the interface generating the reference beam and the rest will pass through the interface up to the object generating the scattering beam; and
- receive and at least partially collect both the reference beam and the scattering beam.

Preferably, the back-focal plane of the objective lens is focused with the illumination beam to produce plane-illumination out of the front aperture thereof, although, for other embodiments, any illumination can be produced as long as it maintains spatial coherence over the time of measurement.

For an embodiment of said reflective mode implementation, the objective lens is configured and arranged such that the reference beam exits the objective lens as a diverging beam from the centre of the objective lens, when it entered as a plane wave, and passes through or is reflected on the first region of the partially transmissive or partially reflective mask, and the scattering beam leaves the objective lens as a plane wave across a full back-aperture of the objective lens, when it entered as a spherical wave, and passes through or is reflected on both the first and the second regions of the partially transmissive or partially reflective mask.

For an embodiment, the above mentioned first region of the partially transmissive or partially reflective mask is also placed in the illumination optical path and is configured and arranged to reflect the illumination beam coming from the light source towards the back-focal plane of the objective lens. Other alternative optical mechanisms (prisms, mirrors, etc.) and arrangements for directing the illumination beam towards the objective lens are also encompassed by the system of the first aspect of the invention.

According to a second implementation of the system of the first aspect of the invention, called herein as transmissive mode, the light collecting means are configured and arranged for collecting said reference beam provided by the transmission through said interface of said another portion of the illumination beam, wherein:

- the illuminating means comprises an illumination objective lens configured and arranged to focus the illumination beam into the back-focal plane of said illumination objective lens to produce plane-illumination out of the front aperture of the illumination objective lens, such that a portion thereof will be scattered by the object generating the scattering beam which will be transmitted through the interface, and another portion will be directly transmitted through the interface generating the reference beam; and
- the light collecting means comprise a collection objective lens configured and arranged to receive and at least partially collect both the reference beam and the scattering beam.

For an embodiment of said transmissive mode implementation, the collection objective lens is configured and arranged such that the reference beam exits the collection objective lens as a diverging beam from the centre of the collection objective lens, when it entered as a plane wave, and passes through or is reflected on the first region of the partially transmissive or partially reflective mask, and the scattering beam leaves the collection objective lens as a plane wave across a full back-aperture of the collection objective lens, when it entered as a spherical wave, and passes through or is reflected on both the first and the second regions of the partially transmissive or partially reflective mask.

Although preferably the attenuation degree provided by the attenuation means has a fixed value, for other embodiments it is adjustable manually or automatically based on the specific use needed at any moment and on parameters associated thereto, such as the size of the object(s) to be detected (and generally tracked), the environmental conditions (light, temperature, etc.), etc., in order to selectively optimising intensity of the reference beam relative to scattered beam to optimise interference contrast on the image sensing means.

An implementation for providing such adjusting of the attenuation degree of the attenuation means comprises, for an embodiment, a mask having adjustable transmissive or reflective properties and a control system connected to said mask to provide the latter with a control signal (such as an electrical signal) which makes it vary its transmissive or reflective properties as desired, the control signal being created whether in response to manual input of data by a user or automatically based on the sensing of such data by corresponding sensors included in the system.

A second aspect of the invention relates to a method of using common-path interferometric scattering imaging to detect an object, comprising, in a known manner:

- emitting an illumination beam along an illumination optical path including at least two different phases of matter;
- simultaneously at least partially collecting through a common collection optical path:

  - a scattered beam provided by the light scattering on an object of a portion of said illumination beam, wherein said object is placed in at least one of said two different phases of matter; and
  - a reference beam provided by the reflection on or transmission through an interface of another portion of said illumination beam, wherein said interface is a surface forming a common boundary among said two different phases of matter;

- receiving and sensing, on image sensing means, the collected scattered and reference beams interfering thereon as an interferometric light signal; and
- receiving and processing data corresponding to said interferometric light signal to at least detect said object, and, optionally, also to track the object.

In contrast to the known methods of using common-path interferometric scattering imaging to detect an object, the one of the second aspect of the present invention comprises, in a characteristic manner, attenuating the reference beam in the common collection optical path before it arrives at said image sensing means.

Embodiments of the method of the second aspect of the invention comprise the use of the system of the first aspect for all the embodiments thereof describe above.

For the system and method of the present invention an extremely short coherence illumination light is desirable, whether by using a coherent light source or a light source not considered "coherent" but which generates light with a coherence short enough and with enough power to allowing the above described light interference to occur. In other words, suitable light sources can be lasers or even LEDs.

In the present document, the term "beam" has been used for referring to light. Alternatively, the term "field" can be used instead of "beam", in an equivalent manner, especially in terms of interference.

Regarding the object, for a preferred embodiment of both the system and the method of the invention, said object is a tiny dielectric nanoparticle or equivalently biological matter such as proteins with small sizes down to 10kDa or below.

The present invention constitutes a system and a method to enhance contrast and sensitivity in scattering interference imaging.

The main purpose of the present invention is to enable the label-free detection and tracking of small [low-refractive] index single nanoparticles such as biological proteins and viruses in a simple measurement configuration.

Since scattering cross-sections scale as $D^6$, where D is the dimension of the particle, for small particles the scattering is incredibly weak. This means that the reference beam reflection far overpowers the scattering signal. To increase the signal, one needs to increase the intensity of the incident beam, but this also increases the intensity of the reference beam. In conventional iSCAT this has meant the need to purchase fast-cameras with large full-well capacity just to be able to collect the huge number of photons produced. Such cameras are prohibitively expensive and generally with low quantum efficiency (due to detector fill-factor limitations), thwarting detection efforts. Most of the photons they detect are not due to the scattering signal but due to the reference beam. This means a lot of the shot noise and other noise on the detector is caused by the reference photons, making it harder to detect the interference signal. In the present invention, the reference beam is massively attenuated (as much as desirable), which eliminates this detector problem, as the beam can be reduced by many orders of magnitude to nearer the scattering intensity of the particles.

Further to this, the system of the first aspect of the present invention does not have any moving optical parts (such as galvo scanners or other moving optical mechanisms, which are frequently used in conventional iSCAT systems), and comprises only very simple optics, with the interference mask being the only customised optic. The uncomplicated setup with few optics, used according to the present invention, is a major benefit over existing systems, and further adds much needed stability, essential to the measurement of smaller particles.

In addition to the above described principle use, the following further configurations can be imagined, for further embodiments:

1. Plug-in module to existing commercial microscope systems: The mask and light source can easily be adapted for use in a commercial microscope setup as a plugin addition to both reflective and transmissive microscopes.

2. Fluorescence: The system of the first aspect of the invention can easily be combined with existing fluorescence microscopy to provide simultaneous fluorescence and scattering measurements.

3. Wavelength: The system of the invention can operate at multiple wavelengths.

4. Mask position: The mask can be placed at conjugate back focal planes in alternative imaging systems, if position of the mask directly below the objective is prohibitive or undesired.

5. Mask as filter: The mask can be adapted as a wavelength dependent filter to be able to combine it with attenuate a reference beam for scattering and allow fluorescence beam to pass unhindered.

6. Point-of-care implementation: For the detection of larger particles, e.g. larger proteins such as exosomes (which have been shown important for monitoring cancer activity), the setup can further be simplified to the point that it can be converted into something the size of a DVD/CD player, or even using an adapted DVD/CD or Blu-ray® player (which already contains most of the components needed in the setup) to create ultra-cheap devices which could be used at point-of-care or even in a domestic-care situation.

Industrial Applications:

The system and method of the present invention enables the detection of small changes in refractive index. It can be used in a wide range of industrial applications. The far lower cost would enable sensitive devices, previously prohibitively expensive, to be used in a wide-range of settings. Including:

Molecular Biology: The invention can be used to detect and track proteins/viruses and protein binding events down to very small proteins (~10kDa or below). This could be used to study protein behaviour in vitro as well as to study protein movement on cell membranes.

Biomedicine: Used in combination with antibody arrays, this could be used to detect single protein binding events over large arrays for use as biomolecular detection in point-of-care settings.

Pollution: The system of the first aspect of the present invention can be implemented, for an embodiment, for portable use to detect pollution/contaminants in water supplies.

Quality control: The present invention can be used to test purity of solutions of small nanoparticles with potential to be combined into a nanoparticle sorting system.

Surface characterization: The invention can be used to characterise surface roughness on transparent surfaces or in thin film depositions such as in semiconductor fabrication.

Point-of-care: For an embodiment, the system can be incorporated into an adapted DVD/ CD/Blu-ray® player with far simpler optics to allow the detection of larger particles (the far simpler objective in a DVD/CD/Blu-ray® player would prohibit reaching ultrasensitive detection limit) which are still relevant for monitoring health conditions. Such as exosomes present in the blood stream which have recently been shown to be relevant for monitoring cancer activity of tumours in the body.

These are just a small selection of possible applications, principally based around the ability to detect very small dielectric nanoparticles both organic and inorganic.

BRIEF DESCRIPTION OF THE FIGURES

In the following some preferred embodiments of the invention will be described with reference to the enclosed figures. They are provided only for illustration purposes without however limiting the scope of the invention.

Figure 1 shows two plots taken from iSCAT paper by Piliarik et al. (2014) showing iSCAT contrast achieved for different molecular weight proteins (a) and the signal noise as a function of frame averaging (b) when the camera is run at 3000 fps, indicating the shot-noise limit. Wavelength employed: 405 nm, 10 mW at 4.5x4.5 $\mu$m field of view = approx. 50 kW/cm$^2$.

Figure 2 shows equivalent measurements to the iSCAT measurements by Piliarik et al. (2014) performed using the system of the first aspect of the present invention. Mean contrast is plotted against protein weight (a) and signal noise as a function of equivalent camera frame rate (b). Wavelength employed: 520 nm, 33 mW at 10x10 $\mu$m field of view = approx. 35 kW/cm$^2$.

Figure 3 schematically shows the system of the first aspect of the invention for an embodiment implementing a reflective mode arrangement, where the reference beam is reflected on an interface.

Figure 4 schematically shows the system of the first aspect of the invention for an embodiment implementing a transmissive mode arrangement, where the reference beam is transmitted through an interface.

Figure 5 shows further measurements performed using the system of the first aspect of the present invention. Detection limit is plotted against camera frame rate and compared to existing iSCAT system based on extracted published data.

DESCRIPTION OF THE PREFERRED EMBODIMENTS

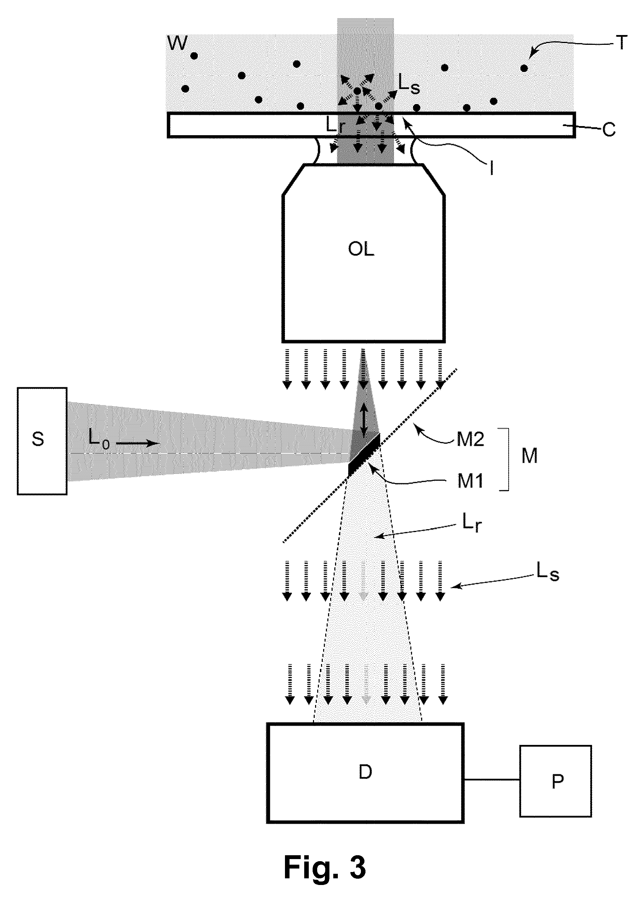

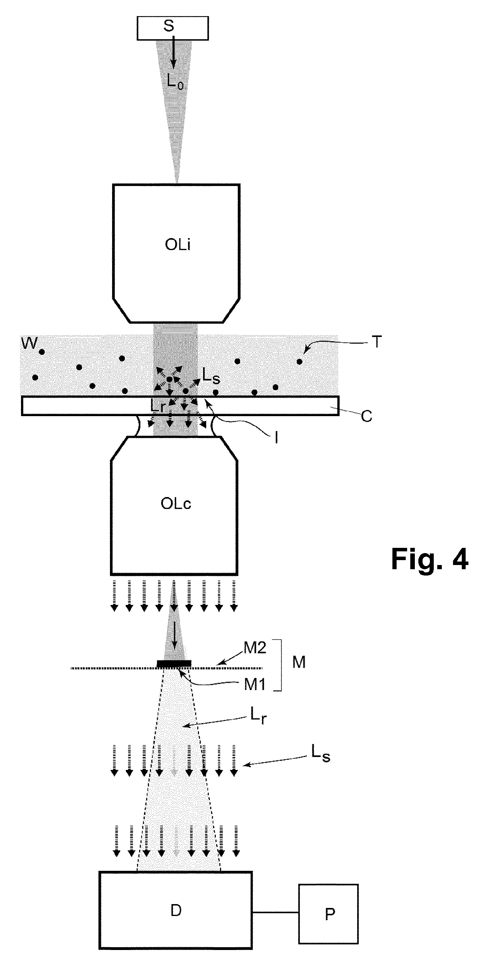

Figures 3 and 4 show two alternative implementations of the system of the first aspect of the invention, particularly the above mentioned reflective mode implementation (Figure 3) and transmissive mode implementation (Figure 4), both of which relate to a common-path interferometric scattering imaging system, comprising:

- illuminating means comprising a light source S configured and arranged for emitting an illumination beam $L_0$ along an illumination optical path including two different phases of matter, one of which is constituted by the material from which the coverslip C is made (generally glass) and the other one by the medium W (in this case water) into which the objects T (in this case nanoparticles, such as proteins) are placed;
- light collecting means configured and arranged for simultaneously at least partially collecting through a common collection optical path:

- a scattered beam $L_s$ provided by the light scattering on several objects T of a portion of the illumination beam $L_0$; and
- a reference beam $L_r$ provided by the reflection on or transmission through an interface I of another portion of said illumination beam $L_0$, wherein the interface I is a surface forming a common boundary surface among the coverslip C and medium W;

- attenuation means comprising a partially transmissive mask M arranged in the common collection optical path for attenuating said reference beam $L_r$ before it arrives at image sensing means D;
- image sensing means D (generally including an imaging lens and a camera) configured and arranged for receiving and sensing the collected scattered $L_s$ beam and the reference $L_r$ beam, once attenuated by the mask M, interfering thereon as an interferometric light signal; and
- processing means P connected to the image sensing means D to receive data corresponding to the interferometric light signal, and configured to process the received data to at least detect the objects T.

For both arrangements, of Figures 3 and 4, the partially transmissive mask M has a semi-transmissive first region M1 arranged in a corresponding region of the common collection path through which the reference beam $L_r$ travels, such that the reference beam $L_r$ is attenuated before reaching the image sensing means D, and a fully or substantially fully transmissive second region M2 arranged in a corresponding region of the common collection path through which part of the scattering beam $L_s$ travels, such that it is traversed thereby before reaching the image sensing means D.

As shown in Figure 3, for the implementation there illustrated, the light collecting means are configured and arranged for collecting the reference beam $L_r$ provided by the reflection on the interface I of the above mentioned another portion of the illumination beam Lo, and the system comprises an objective lens OL which forms part of both the illuminating means and the light collecting means and which is configured and arranged in both the illumination and the collection optical paths to, respectively:

- focus the illumination beam Lo into the back-focal plane of the objective lens OL to produce plane-illumination out of the front aperture of the objective lens OL, such that a portion thereof will be reflected by the interface I generating the reference beam $L_r$ and the rest will pass through the interface I up to the objects T generating the scattering beam; and
- receive and at least partially collect both the refer-

ence beam $L_r$ and the scattering beam $L_s$.

The objective lens OL is configured and arranged such that the reference beam $L_r$ exits the objective lens OL as a diverging beam from the centre of the objective lens OL, when it entered as a plane wave, and impinges on the first region M1 of the partially transmissive mask M which highly attenuates it letting pass through there only a small percentage (preferably below 1 %, and more preferably around 0.1% in terms of beam intensity, or equivalently relative to field amplitude with an attenuation factor preferably below $\alpha$ = 0.1 or more preferably around $\alpha$ = 0.03) of the reference beam $L_r$, while the scattering beam $L_s$ leaves the objective lens OL as a plane wave across a full back-aperture of the objective lens OL, when it entered as a spherical wave, and passes mostly through the fully or substantially fully transmissive second region M2 of the partially transmissive mask M, although a central part of the scattering beam $L_r$ passes through the first region M1 of the mask M and is thus attenuated thereby.

As shown Figure 3, the first region M1 of the partially transmissive mask M is also placed in the illumination optical path and is configured and arranged to reflect the illumination beam $L_0$ coming from the light source S towards the back-focal plane of the objective lens OL.

Specifically, for the reflective mode implementation of Figure 3, the system of the present invention constitutes a stand-alone microscope imaging system based on reflection scattering as described above and in more detail as follows:

1. Light of short temporal-coherence length is created by modulating the supply current of a standard laser-diode (light source S) at high frequency (>1 MHz) which is commonly implemented in consumer laser systems such as Blu-ray® players. This decreases the laser coherence length to reduce interference of objects outside of the range of interest. This is preferably as short as possible, but long enough to keep coherence between the source of the reflection as the reference beam $L_r$, for the illustrated embodiment, the glass-water interface between the coverslip C, and the particle T positioned on top of this. A super-bright LED or similar short coherence length light source could be used instead of modulated laser.

2. Light is focused into the back-focal plane of the objective lens OL to produce plane-illumination out of the front aperture of the objective lens OL. The interference mask M is used here as a mirror to simplify coupling of the incident beam $L_0$ into the objective lens OL (although this can be accomplished in other ways).

3. The plane illumination beam is partially reflected from the non-index matched glass-water interface I of the objective lens OL generating the reference

beam $L_r$. The rest of the illumination beam Lo passes through the interface I interacting with the sample T in the water W. This light principally generates Rayleigh scattering (in small particles) in-phase with the transmitted light. The scattered light can be approximated as a point-source of light emitting spherical waves propagating in all directions and this is the sample or scattering beam $L_s$. The phase of the scattered beam $L_s$ is shifted relative to the incoming beam Lo due to a Gouy phase shift of pi/2.

4. The reference $L_r$ and scattered sample beam $L_s$ are partially collected by the same objective lens OL. The sample beam $L_s$ leaves the objective lens OL as a plane wave across the full back-aperture of the objective lens OL since it entered as a spherical wave. The reference beam $L_r$ (entering as a plane wave) exits the objective lens as a diverging beam from the centre of the objective lens OL.

5. The sample beam $L_s$ impinges on the interference mask M and is mostly transmitted in the transparent regions M2 surrounding the centre, with the central part M1 of the mask M blocking only a small percentage of this beam [as in dark-field microscopy]. The reference beam $L_r$ hits the centre region M1 of the interference mask M and is almost completely attenuated. However, importantly the centre region M1 of the mask M leaks some of the reference beam $L_r$ through to allow for interference on the detector, i.e. on the image sensing means D (which includes at least an imaging lens and a camera).

6. The sample plane is then imaged onto a camera of the image sensing means D where the two beams $L_r$, $L_s$ interfere providing the contrast to measure the particles T.

In contrast to the implementation of Figure 3, for the transmissive mode implementation of the system of the first aspect of the invention illustrated in Figure 4, the light collecting means are configured and arranged for collecting the reference beam $L_r$ provided by the transmission through the interface I of the above mentioned other portion of the illumination beam $L_0$, wherein:

- the illuminating means comprises an illumination objective lens OLi configured and arranged to focus the illumination beam Lo into the back-focal plane of the illumination objective lens OLi to produce plane-illumination out of the front aperture of the illumination objective lens OLi, such that a portion thereof will be scattered by the objects T generating the scattering beam $L_s$ which will be transmitted through the interface I, and another portion will be directly transmitted through the interface I generating the reference beam $L_r$; and

- the light collecting means comprise a collection objective lens OLc configured and arranged to receive and at least partially collect both the reference beam $L_r$ and the scattering beam $L_s$.

The collection objective lens OLc is configured and arranged such that the reference beam $L_r$ exits the collection objective lens OLc as a diverging beam from the centre of the collection objective lens OLc, when it entered as a plane wave, and passes through the first region M1 of the partially transmissive mask M which highly attenuates it letting pass there through only a small percentage (preferably below 1 %, and more preferably around 0.1% in terms of beam intensity, or equivalently relative to field amplitude with an attenuation factor preferably below $\alpha = 0.1$ or more preferably around $\alpha = 0.03$) of the reference beam $L_r$, while the scattering beam $L_s$ leaves the collection objective lens OLc as a plane wave across a full back-aperture of the collection objective lens OLc, when it entered as a spherical wave, and passes mostly through the fully or substantially fully transmissive second region M2 of the partially transmissive mask M, although a central part of the scattering beam $L_r$ passes through the first region M1 of the mask M and is thus attenuated thereby.

Specifically, for the transmissive mode implementation of Figure 4, the system of the present invention constitutes a stand-alone microscope imaging system based on transmission scattering as described above and in more detail as follows.

In transmissive-mode, the microscope operates mainly the same as in reflective-mode. More optics (principally a second objective) are required as a new excitation path from above the sample is needed.

The principle remains the same as that in reflection with a reference beam $L_r$ and scattering signal beam $L_s$ generated by a single excitation light source S then interfere on a detector D after the reference beam $L_r$ is partially attenuated by a partially transmissive mask M or equivalent.

The main difference here is that the reference beam $L_r$ will be much stronger in intensity, as here it is almost 100% the intensity $I_0$ of the incident beam Lo, as most of the light is transmitted rather than reflected by the interface I. This differs in the reflective-mode case, as in that case the reference beam $L_r$ is generated by the reflection off the glass/water interface I, which reduces its intensity to around 0.5% of the initial beam Lo.

In practice this means that in transmissive mode, the mask M must attenuate the reference beam $L_r$ by at least one order of magnitude more compared to the reflective mode case. This potentially complicates the production of the mask M. Along with simpler optics, this highlights the distinctive benefit of the reflective mode case where the reference beam $L_r$ is pre-attenuated by the glass/water interface I. However, given a suitable mask, both are equivalent.

Mask construction:

Regarding the above described mask M, it was built for its inclusion in the system of the present invention, for an embodiment (for the arrangements of Figures 3 and 4), as follows:

    1. The mask M consists of a semi-transmissive section and a transmissive section.
    2. The semi-transmissive section M1 was created by depositing metal onto a sacrificial premask defining the semi-transmissive region on an optical flat.
    3. A vinyl sticker was used as a pre-mask to define the area.
    4. Metal was evaporated at the desired thickness to attenuate signal passing through, ensuring metal was evenly deposited.

The mask M itself can be constructed in many different forms and materials depending on availability and exact implementation needed. A well-formed mask with precise thickness is key to obtaining reliable and symmetric interference patterns on the detector.

Specifically, as stated in a previous section, for an embodiment (not shown), the collection of both the reference and the scattering beams is performed on reflecting from the mask, the latter having a semi-reflective section (almost transparent) for the reference beam (thus attenuated by reflection) and a reflective section for the scattering beam.

Also, for the manufacturing of the mask, instead of metallic coatings, dielectric anti-reflective/reflective Bragg type coatings can be used, for other embodiments.

Technical Advantage

The technique used in the system and method of the present invention significantly improves on the published conventional iSCAT technique (described in the Background section above) while allowing better contrast and sensitivity. Here the benefit of the technique of the present invention over iSCAT, the best implementation as yet of interferometric light scattering microscopy, is elaborated.

In general, in interference scattering microscopy, the signal imaged onto the detector has intensity:

$$I_0 = I_0 \{ r^2 + s^2 + 2rs \cos\theta \}$$

Where, as stated in a previous section, r is a co-efficient describing the amplitude of the reference beam, s is a co-efficient relating to the amplitude of the scattering signal, and $\theta$ is the phase difference between the two signals. For detecting small particles such as proteins the difference between $r^2$ and $s^2$ is many orders of magnitude (around $10^7$ for a 100 kDa protein) making it practically impossible to measure the scattering signal upon the background of the reference beam. Crucially the interference term, scales both with r and s, meaning there is much less difference between this and the $r^2$ term, only around $10^4$ for the same 100kDa protein. This then becomes possible to measure with the latest detectors and very stable light source coupled with low noise levels.

This key advantage of the system and method of the present invention, is the in-line suppression of the reference signal relative to the scattering signal in an in-line interference microscopy setup similar to iSCAT. This allows the optimisation of the contrast between the reference beam intensity and the interference cross-term. This enables the dramatic reduction of the unwanted reference beam intensity relative to the interference intensity and thus increase the sensitivity of the setup and reduce dependency on noise and stability of the excitation light source and overall setup. Since far fewer photons overall are now being detected, the camera used can be replaced with far cheaper versions as the huge dynamic range is no longer needed. It also means that a very cheap laser or LED light source with short coherence length can be used.

Comparison to conventional iSCAT:

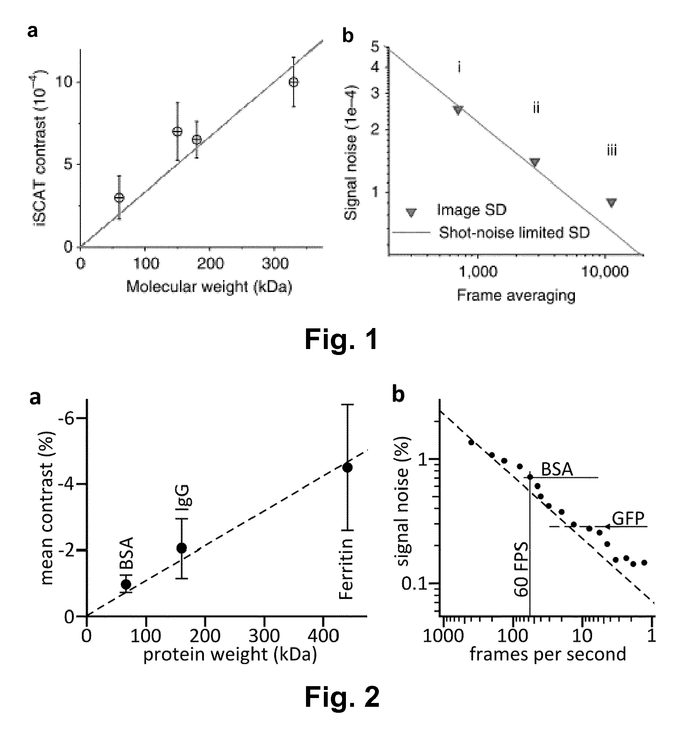

With reference to Figures 1 and 2, the technique of the system and method of the present invention is directly compared to the best achieved in the literature taken from Piliarik et al. (2014). They use iSCAT to detect the binding of single proteins of various sizes from 65.5 kDa (BSA) to 340 kDa (fibrinogen). Using their noise statistics it is calculated how long they need to integrate for to detect their smallest protein (BSA), i.e. to detect the signal (iSCAT contrast) above the noise. For the BSA protein the molecular weight is 38 kDA and from Figure 1 (a), this corresponds to an iSCAT contrast of $3\times10^{-4}$. From the noise statistics, Figure 1 (b), they need to average over 600-700 frames. Since they run their camera at 3000 fps, this corresponds to 0.2 s integration or equivalently running at 5 fps, which is the minimum speed they can run and detect/track BSA protein.

The present inventors repeated similar experiments using the system of the present invention (Figure 2), for the arrangement of Figure 3. It can be seen that to detect BSA (see Figure 2(a)) given the signal noise measured in the present experiment it can run at a higher rate of 60fps (see Figure 2(b)). This is more than an order of magnitude (~x12) improvement in sensitivity.

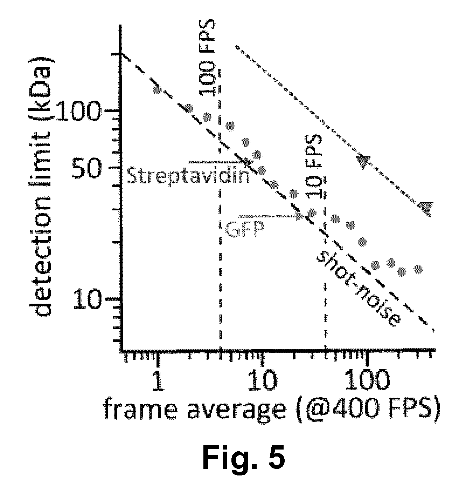

Further experiments were performed by the present inventors with the system of the first aspect of the invention, particularly for non-specific binding of a variety of single proteins to a coverglass in comparison to a control with buffer only. Figure 5 shows the results of said further experiments, where detection limit is plotted as a function of frame averaging (dots) in comparison to shot-noise-limited behaviour (dashed line). The acquisition rate for the experiments was 400 FPS. The dotted line and triangles show a comparison to the detection limit extracted from Piliarik et al. (2014).

Key Advantages of the system and method of the present invention:

a) Increased signal level
Scattering intensity scales inversely with the fourth power of illuminating wavelength, and the interference cross term [$2rs\cos\theta$] scales inversely with the square of illuminating wavelength. Since in *Piliarik et al.* they used a shorter wavelength and more powerful laser, actual gains of the system and method of the present invention are higher than an order of magnitude. If parameters identical to those reported previously (wavelength and intensity) were to be employed in the present invention, signal sensitivity would increase by another factor of 2.4. Thus with a total improvement in sensitivity of around 30.

b) Reduced sensitivity to reference beam instability
The attenuation of the reference beam according to the present invention reduces the effect of instability in phase and intensity in this signal introduced throughout the beam path or from the laser and spatially across the field of view in the system/microscope. This allows to move to larger field of view on the system/microscope thus detecting more particle binding sites at once. No deterioration was noticed in signal moving from the 10x10 $\mu$m field of view shown in Figure 2, to 40x40 $\mu$m (16x bigger area). This is a large advantage over conventional iSCAT which struggles with even detection of gold nanoparticles in a wide-field setup (i.e. without using Galvometric scanning or other scanning techniques) [see Opt. Express 14, 405 (2006)], due to its extreme sensitivity to phase shifts from interfering back reflections.

c) Cost
The increased signal, lower photon count on the detector and increased stability of the signal lead to a setup which for the same level of detection costs far less to implement and requires a simpler geometry. The detectors, light source and other optical elements in a conventional iSCAT setup, typically put the cost at > $150,000, while in the proposed setup for the system of the present invention, the purchased elements can easily be found for < $10,000. With most of this cost due to the objective lens. With further modifications it is feasible to imagine a system costing even less and at the cost of sensitivity objective could be massively simplified for systems in the sub-$2000 range.

These advantages clearly illustrate the unique nature of the system and method of the present invention and the large impact it could have in industry.

A person skilled in the art could introduce changes and modifications in the embodiments described without departing from the scope of the invention as it is defined in the attached claims.

**Claims**

1. A common-path interferometric scattering imaging system, comprising:

   - illuminating means comprising a light source (S) configured and arranged for emitting an illumination beam ($L_0$) along an illumination optical path including at least two different phases of matter;
   - light collecting means configured and arranged for simultaneously at least partially collecting through a common collection optical path:

      - a scattered beam ($L_s$) provided by the light scattering by an object (T) of a portion of said illumination beam ($L_0$), wherein said object (T) is placed in at least one of said two different phases of matter; and
      - a reference beam ($L_r$) provided by the reflection on or transmission through an interface (I) of another portion of said illumination beam ($L_0$), wherein said interface (I) is a surface forming a common boundary among said two different phases of matter;

   - image sensing means (D) configured and arranged for receiving and sensing the collected scattered ($L_s$) and reference ($L_r$) beams interfering thereon as an interferometric light signal; and
   - processing means (P) connected to said image sensing means (D) to receive data corresponding to said interferometric light signal, and configured to process said received data to at least detect said object (T);

   **characterised in that** it comprises attenuation means arranged in said common collection optical path for attenuating said reference beam ($L_r$) before it arrives at said image sensing means (D).

2. A system according to claim 1, wherein said attenuation means comprises:

   - a partially transmissive mask (M) having a semi-transmissive region arranged in a corresponding region of the common collection path through which the reference beam ($L_r$) travels, such that the reference beam ($L_r$) is attenuated on transmission before reaching the image sensing means (D); or
   - a partially reflective mask (M) having a semi-reflective region arranged in a corresponding region of the common collection path through which the reference beam (Lr) travels, such that the reference beam (Lr) is attenuated on reflection before reaching the image sensing means (D).

3. A system according to claim 2, wherein said semi-transmissive or semi-reflective region is a first region (M1) of said partially transmissive or partially reflective mask (M), the mask (M) comprising a second region (M2) arranged in a corresponding region of the common collection path through which part of the scattering beam ($L_s$) travels, such that said part of the scattering beam ($L_s$) traverses said second region (M2) or is reflected thereon before reaching the image sensing means (D), by transmission or by reflection, wherein said first (M1) and said second (M2) regions have different transmissive or reflective properties and said partially transmissive or partially reflective mask (M) maintains the coherence relationship between the reference ($L_r$) and scattered ($L_s$) beams.

4. A system according to claim 3, wherein said second region (M2) is a fully or substantially fully transmissive or reflective region.

5. A system according to claim 3 or 4, wherein said first region (M1) has a circular or cylindrical shape and said second region (M2) has an annular or tubular shape with an inner diameter larger than the diameter of said first region (M1) and being arranged concentrically with respect thereto.

6. A system according to any of the previous claims, wherein said illumination optical path and said common collection path are configured and arranged such that the reference ($L_r$) and scattered ($L_s$) beams are generated at such closer positions that ensure a phase-locked relationship between the reference ($L_r$) and scattered ($L_s$) beams, the system being absent of any phase varying mechanism for said reference ($L_r$) and scattered ($L_s$) beams.

7. A system according to any of the previous claims, comprising a coverslip (C) for said object, wherein said interface (I) is the common boundary surface among said coverslip (C) and a medium (W) into which said object (T) is placed, the material of which said coverslip (C) is made being non-index matched with said medium (W).

8. A system according to any of the previous claims, wherein said light collecting means are configured and arranged for collecting said reference beam ($L_r$) provided by the reflection on said interface (I) of said another portion of the illumination beam ($L_0$), wherein the system comprises an objective lens (OL) which forms part of both the illuminating means and the light collecting means and which is configured and arranged in both the illumination and the collection optical paths to, respectively:

- focus the illumination beam ($L_0$) into the back-focal plane of said objective lens (OL) to produce illumination out of the front aperture of the objective lens (OL), such that a portion thereof will be reflected by the interface (I) generating the reference beam ($L_r$) and the rest will pass through the interface (I) up to the object (T) generating the scattering beam; and
- receive and at least partially collect both the reference beam ($L_r$) and the scattering beam ($L_s$).

9. A system according to claim 8 when depending on claim 3, wherein said objective lens (OL) is configured and arranged such that the reference beam ($L_r$) exits the objective lens (OL) as a diverging beam from the centre of the objective lens (OL), and passes through or is reflected on the first region (M1) of the partially transmissive or partially reflective mask (M), and the scattering beam ($L_s$) leaves the objective lens (OL) as a plane wave across a full back-aperture of the objective lens (OL), when it entered as a spherical wave, and passes through or is reflected on both the first (M1) and the second (M2) regions of the partially transmissive or partially reflective mask (M).

10. A system according to claim 9, wherein said first region (M1) of the partially transmissive or partially reflective mask (M) is also placed in the illumination optical path and is configured and arranged to reflect the illumination beam (Lo) coming from the light source (S) towards the back-focal plane of the objective lens (OL).

11. A system according to any of claims 1 to 7, wherein said light collecting means are configured and arranged for collecting said reference beam ($L_r$) provided by the transmission through said interface (I) of said another portion of the illumination beam (Lo), wherein:

- the illuminating means comprises an illumination objective lens (OLi) configured and arranged to focus the illumination beam ($L_0$) into the back-focal plane of said illumination objective lens (OLi) to produce plane-illumination out of the front aperture of the illumination objective lens (OLi), such that a portion thereof will be scattered by the object (T) generating the scattering beam ($L_s$) which will be transmitted through the interface (I), and another portion will be directly transmitted through the interface (I) generating the reference beam ($L_r$); and
- the light collecting means comprise a collection objective lens (OLc) configured and arranged to receive and at least partially collect both the reference beam ($L_r$) and the scattering beam ($L_s$).

12. A system according to claim 11 when depending on claim 3, wherein said collection objective lens (OLc) is configured and arranged such that the reference beam ($L_r$) exits the collection objective lens (OLc) as a diverging beam from the centre of the collection objective lens (OLc), when it entered as a plane wave, and passes through or is reflected on the first region (M1) of the partially transmissive or partially reflective mask (M), and the scattering beam ($L_s$) leaves the collection objective lens (OLc) as a plane wave across a full back-aperture of the collection objective lens (OLc), when it entered as a spherical wave, and passes through or is reflected on both the first (M1) and the second (M2) regions of the partially transmissive or partially reflective mask (M).

13. A system according to any of the previous claims, wherein said processing means (P) implements an algorithm to process the received data according to the following equation:

$$I_{total} = I_0 \left\{ \frac{r^2}{\alpha^2} + s^2 + \frac{2rs}{\alpha} \cos\theta \right\}$$

where r is the normalised reference beam amplitude, s is the normalised scattering beam amplitude, $\theta$ is the phase difference between the reference ($L_r$) and scattering ($L_s$) beams, $\alpha$ is the attenuation amplitude defined as the reciprocal transmission amplitude, $I_{total}$ is the total intensity of the light on the image sensing means (D) caused by the two interfering reference ($L_r$) and scattering ($L_s$) beams, and $I_0$ is an initial light intensity on the image sensing means (D), wherein said attenuation means have a degree of attenuation for said reference beam ($L_r$) calculated with the purpose of maximizing the term $2rs \cos\theta$ with respect to the term $r^2$ of the above equation to enhance detection sensitivity.

14. A method of using common-path interferometric scattering imaging to detect an object, comprising:

- emitting an illumination beam ($L_0$) along an illumination optical path including at least two different phases of matter;
- simultaneously at least partially collecting through a common collection optical path:

- a scattered beam ($L_s$) provided by the light scattering on an object (T) of a portion of said illumination beam ($L_0$), wherein said object (T) is placed in at least one of said two different phases of matter; and
- a reference beam ($L_r$) provided by the re-

flection on or transmission through an interface (I) of another portion of said illumination beam ($L_0$), wherein said interface (I) is a surface forming a common boundary among said two different phases of matter;

- receiving and sensing, on image sensing means (D), the collected scattered ($L_s$) and reference ($L_r$) beams interfering thereon as an interferometric light signal; and
- receiving and processing data corresponding to said interferometric light signal to at least detect said object (T);

**characterised in that** it comprises attenuating said reference beam in said common collection optical path before it arrives at said image sensing means (D).

15. A method according to claim 14, wherein said object (T) is a dielectric nanoparticle with a size of substantially 10kDa or below.

**Fig. 1**

**Fig. 2**

**Fig. 3**

**Fig. 4**

Fig. 5

Europäisches
Patentamt

European
Patent Office

Office européen
des brevets

# EUROPEAN SEARCH REPORT

Application Number

EP 16 18 1396

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Sam A Johnson: "Phase Contrast Microscopy" In: "Biomedical Optical Phase Microscopy and Nanoscopy", 1 January 2013 (2013-01-01), Academic Press, US, XP055311967, ISBN: 978-0-12-415871-9 pages 3-18, * page 9; figure 1.6 * * page 15, last paragraph, lines 1-3 * | 1,2,7,14 | INV. G02B21/14 G01N21/45 G01N15/02 B82Y35/00 |
| X | ZHAOZHENG YIN ET AL: "Understanding the Optics to Aid Microscopy Image Segmentation", 20 September 2010 (2010-09-20), MEDICAL IMAGE COMPUTING AND COMPUTER-ASSISTED INTERVENTION - MICCAI 2010, SPRINGER BERLIN HEIDELBERG, BERLIN, HEIDELBERG, PAGE(S) 209 - 217, XP019151706, ISBN: 978-3-642-15704-2 * page 209, last line * * chapter "2 Imaging Model of Phase Contrast Microscopy" * | 1,2,7,14 | |
| A | Siegfried Weisenburger et al.: "Light microscopy: an ongoing contemporary revolution", , 8 June 2015 (2015-06-08), pages 1-37, XP055312441, DOI: 10.1080/00107514.2015.1026557 Retrieved from the Internet: URL:https://arxiv.org/pdf/1412.3255v2.pdf [retrieved on 2016-10-19] * page 4, last paragraph * | 1,2,7,14 | TECHNICAL FIELDS SEARCHED (IPC) G02B G01N B82Y |

-/--

~~The present search report has been drawn up for all claims~~

| Place of search | Date of completion of the search | Examiner |
|---|---|---|
| Munich | 30 March 2017 | Strohmayer, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 16 18 1396

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Ashton Christy: "On the design of a combined Raman and interferometric scattering high resolution microscope", University of British Columbia , 19 July 2016 (2016-07-19), pages i-14, XP055312767, Vancouver DOI: 10.14288/1.0306442 Retrieved from the Internet: URL:https://open.library.ubc.ca/cIRcle/collections/ubctheses/24/items/1.0306442 [retrieved on 2016-10-20] * page 2 - page 3 * * page 7 - page 8 * ----- | 1,2,7,14 | |
| X | US 2011/075151 A1 (JEONG HWAN J [US]) 31 March 2011 (2011-03-31) * paragraph [0068] - paragraph [0073]; figures 1,2a,2b,4a,4b,5,9,10,29,36,37 * * paragraph [0140] * * paragraph [0187] - paragraph [0189] * * paragraph [0258] - paragraph [0263] * * paragraph [0281] * ----- | 1-6,13, 14 | TECHNICAL FIELDS SEARCHED (IPC) |
| X | Ariel Lipson ET AL: "12.4 Applications of the Abbe theory: Spatial filtering" In: "Optical Physics", 1 January 2011 (2011-01-01), Cambridge University Press, UK, XP055312812, ISBN: 978-0-521-49345-1 pages 425-438, * page 426, last five lines of penultimate paragraph; figures 12.17(a), 12.27 * ----- | 1-7,13, 14 | |

-/--

~~The present search report has been drawn up for all claims~~

| Place of search | Date of completion of the search | Examiner |
|---|---|---|
| Munich | 30 March 2017 | Strohmayer, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 16 18 1396

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Julio Vazquez: "Microscopy Tutorial", , 1 January 2003 (2003-01-01), pages 1-48, XP055360139, Retrieved from the Internet: URL:https://sharedresources.fredhutch.org/ sites/default/files/microscopy_tutorial2.p df [retrieved on 2017-03-29] * chapter "6.4. Phase contrast" and * * Part III. Image Processing * ----- | 1-5,7, 13,14 | |
| X | Vassilios Sarafis: "Phase Imaging in Plant Cells and Tissues" In: "Biomedical Optical Phase Microscopy and Nanoscopy", 1 January 2013 (2013-01-01), Academic Press, US, XP055312314, ISBN: 978-0-12-415871-9 pages 53-68, * page 53 - page 55 * ----- | 1-7,13, 14 | |
| X | Maksymilian Pluta: "Chapter 5. Phase Contrast Microscopy & Chapter 6. Amplitude Contrast, Dark-Field, ... , and Other Related Techniques" In: "Advanced Light Microscopy", 1 January 1989 (1989-01-01), PWN-Polish Scientific Publishers, Elsevier, Poland, XP055313917, ISBN: 978-0-444-98918-5 pages 1-113, * page 10; figures 5.2,5.6,5.7,5.15,5.41 * * page 12, paragraph 1 - paragraph 2 * * page 30, paragraph 2 * * page 110 - page 111 * ----- | 1-7,13, 14 | TECHNICAL FIELDS SEARCHED (IPC) |

-/--

~~The present search report has been drawn up for all claims~~

| Place of search | Date of completion of the search | Examiner |
|---|---|---|
| Munich | 30 March 2017 | Strohmayer, Bernhard |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

......................................................................

& : member of the same patent family, corresponding
document

EPO FORM 1503 03.82 (P04C01)

page 3 of 5

Europäisches
Patentamt

European
Patent Office

Office européen
des brevets

# EUROPEAN SEARCH REPORT

Application Number

EP 16 18 1396

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SANTAMARIA J ET AL: "NOISE-FREE CONTRAST IMPROVEMENT WITH A LOW FREQUENCY POLARIZING FILTER: A PRACTICAL EVALUATION", APPLIED OPTICS, OPTICAL SOCIETY OF AMERICA, WASHINGTON, DC; US, vol. 16, no. 6, 1 June 1977 (1977-06-01), pages 1513-1520, XP009023522, ISSN: 0003-6935, DOI: 10.1364/AO.16.001513 * page 1513 - page 1514; figure 1 * | 1-7,13, 14 | |
| X | Miles V Klein ET AL: "Phase-Contrast Microscopy" In: "OPTICS", 1 January 1986 (1986-01-01), John Wiley & Sons, New York, XP055359699, pages 485-487, * page 485 - page 487 * | 1-5,7, 13,14 | |
| A | ZIJLSTRA P ET AL: "Single metal nanoparticles: optical detection, spectroscopy and applications;Single metal nanoparticles", REPORTS ON PROGRESS IN PHYSICS, INSTITUTE OF PHYSICS PUBLISHING, BRISTOL, GB, vol. 74, no. 10, 19 September 2011 (2011-09-19), page 106401, XP020211527, ISSN: 0034-4885, DOI: 10.1088/0034-4885/74/10/106401 * page 21 - page 24 * | 1-7,13, 14 | TECHNICAL FIELDS SEARCHED (IPC) |

-/--

~~The present search report has been drawn up for all claims~~

| Place of search | Date of completion of the search | Examiner |
|---|---|---|
| Munich | 30 March 2017 | Strohmayer, Bernhard |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 4 of 5

Europäisches
Patentamt

European
Patent Office

Office européen
des brevets

**EUROPEAN SEARCH REPORT**

Application Number

EP 16 18 1396

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JAIME ORTEGA ARROYO ET AL: "Interferometric scattering microscopy and its combination with single-molecule fluorescence imaging", NATURE PROTOCOLS, vol. 11, no. 4, 3 March 2016 (2016-03-03), pages 617-633, XP055360160, GB ISSN: 1754-2189, DOI: 10.1038/nprot.2016.022 * page 617, right-hand column - page 618, left-hand column * ----- | 1-7,13, 14 | |
| A | US 2009/257057 A1 (NOVOTNY LUKAS [US] ET AL) 15 October 2009 (2009-10-15) * paragraph [0046] - paragraph [0048]; figures 3,8 * ----- | 1-7,13, 14 | |
| A | US 2015/204728 A1 (LIU YANG [US] ET AL) 23 July 2015 (2015-07-23) * abstract; figures 1,2,4,6 * ----- | 1-7,13, 14 | TECHNICAL FIELDS SEARCHED (IPC) |

~~The present search report has been drawn up for all claims~~

| Place of search | Date of completion of the search | Examiner |
|---|---|---|
| Munich | 30 March 2017 | Strohmayer, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

Application Number

EP 16 18 1396

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☒ Only part of the further search fees have been paid within the fixed time limit. The present European search report has been drawn up for those parts of the European patent application which relate to the inventions in respect of which search fees have been paid, namely claims:

1-7, 13, 14(all partially)

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

Application Number

EP 16 18 1396

The Search Division considers that the present European patent application does not comply with the requirements of unity of invention and relates to several inventions or groups of inventions, namely:

```
1. claims: 1, 2, 7, 14(all partially)

    No special technical features
                ---

2. claims: 8-10(completely); 1, 2, 7, 14(partially)

    The reference beam is provided by reflection through the
    interface.
    Problem: alternative provision of reference beam
                ---

3. claims: 3-6

    Absence of any phase varying mechanism for said reference
    and scattered beams
    Problem: alternative interference scheme
                ---

4. claims: 11, 12

    Plane wave illumination
    Problem: alternative illumination scheme
                ---

5. claim: 13

    Particular choice of attenuation for the reference beam
    Problem: to enhance detection sensitivity
                ---

6. claim: 15

    The object is a dielectric nanoparticle with a size of
    substantially 10kDa or below.
    Problem: choice of a particular object
                ---
```

## ANNEX TO THE EUROPEAN SEARCH REPORT
## ON EUROPEAN PATENT APPLICATION NO.

EP 16 18 1396

This annex lists the patent family members relating to the patent documents cited in the above-mentioned European search report.
The members are as contained in the European Patent Office EDP file on
The European Patent Office is in no way liable for these particulars which are merely given for the purpose of information.

30-03-2017

| Patent document cited in search report | Publication date | Patent family member(s) | | Publication date |
|---|---|---|---|---|
| US 2011075151 A1 | 31-03-2011 | NONE | | |
| US 2009257057 A1 | 15-10-2009 | US 2009257057 A1 | | 15-10-2009 |
| | | WO 2009073259 A2 | | 11-06-2009 |
| US 2015204728 A1 | 23-07-2015 | US 2015204728 A1 | | 23-07-2015 |
| | | WO 2015085216 A1 | | 11-06-2015 |

EPO FORM P0459

For more details about this annex : see Official Journal of the European Patent Office, No. 12/82

## REFERENCES CITED IN THE DESCRIPTION

**Non-patent literature cited in the description**

- **LINDFORS et al.** *PRL,* 2004, vol. 93, 3
- **PILIARIK et al.** *Nature Communications,* 2014, vol. 5, 4495
- *Opt. Express,* 2006, vol. 14, 405